# EUROPEAN PATENT APPLICATION

(11) **EP 3 836 312 A1**
(43) Date of publication of application: **16.06.2021**
(21) Application number: 19215330.2
(22) Date of filing: 11.12.2019
(51) Int. Cl.: H01R 13/52, H02G 3/06, H02G 3/08, H02G 15/013, H02G 15/115

(54) **A CABLE CONNECTOR HOUSING FOR HAZARDOUS AREAS**

(71) Applicant: ABB Schweiz AG, 5400 Baden (CH)
(72) Inventor: SCHMITT, Johannes, 61381 Friedrichsdorf (DE); BÜNGEL, Benjamin, 61476 Kronberg (DE); GUTH, Matthias, 65760 Eschborn (DE)
(74) Representative: Kietzmann, Lutz

(57) **Abstract**

The present invention relates to a a cable connector housing for hazardous areas, comprising. A first part, a second part, a first cable gland, and a second cable gland. The first part is configured to connect to and separate from the second part. When the first part is connected to the second part a cavity is formed within which a cable connector can be housed. The first cable gland is configured to connect to the first part. The first cable gland is configured to connect to a part of a first cable that is suitable for use in a hazardous area. The second cable gland is configured to connect to the second part. The second cable gland is configured to connect to a part of a second cable that is suitable for use in the hazardous area. The first part, the second part, the first cable gland, and the second cable gland are configured such that when the first part is connected to the second part, and the first cable gland is connected to the first part and the first part is connected to the part of the first cable, and the second cable gland is connected to the second part and the second part is connected to the part of the second cable, a connector housing is formed that is suitable for use in the hazardous area.

## Description

### FIELD OF THE INVENTION

The present invention relates to cable connectors for hazardous areas.

### BACKGROUND OF THE INVENTION

Analyzers in the field are required connection for power and communication, and this is normally provided by means of some form of connection unit. As analyzers are utilised in many areas, such connection units must be suitable for use in hazardous areas. EX-certified connectors are available that connect one cable to another cable, however these connectors are very expensive and generally do not provide a large number of separate connection points or pins. Cables can also be connected one to the other through "splice boxes" where individual cables are installed on terminals inside an EX approved terminal box. However, installation is very time-consuming and prone to errors during installation, and furthermore there is no connection and separation functionality enabling efficient reinstallation of replacement or different analyzer equipment. Other connection means are provided in the form of EX-sockets, where wires are connected and the whole unit is sealed with glue. However again, there is no ability relating to interchangeability.

There is a need to address these issues.

### SUMMARY OF THE INVENTION

Therefore, it would be advantageous to have an improved means for connecting cables in hazardous areas.

The object of the present invention is solved with the subject matter of the independent claims, wherein further embodiments are incorporated in the dependent claims.
In an aspect, there is provided cable connector housing for hazardous areas, comprising:
- a first part;
- a second part;
- a first cable gland; and
- a second cable gland;
The first part is configured to connect to and separate from the second part. When the first part is connected to the second part a cavity is formed within which a cable connector can be housed. The first cable gland is configured to connect to the first part. The first cable gland is configured to connect to a part of a first cable that is suitable for use in a hazardous area. The second cable gland is configured to connect to the second part. The second cable gland is configured to connect to a part of a second cable that is suitable for use in the hazardous area. The first part, the second part, the first cable gland, and the second cable gland are configured such that when the first part is connected to the second part, and the first cable gland is connected to the first part and the first part is connected to the part of the first cable, and the second cable gland is connected to the second part and the second part is connected to the part of the second cable, a connector housing is formed that is suitable for use in the hazardous area.
In other words, a hazardous environment proof outer connection body is provided that is for example EX-Certified and this has cable glands that are also certified for hazardous environments, and a normal connector can be utilised for cable connection but which now resides within the hazardous environment outer connection body. Thus, a cost-effective and convenient system is provided for connecting cables in hazardous environments.
To put this another way, two end parts of a connector housing can connect to each other and house a connector within the space, and where cables can attach to each part.

In an example, the first part is configured to screw to the second part.

In an example, the first part is configured to bolt to the second part.

In an example, a structural material of the first part and the second part comprises metal.

In an example, a structural material of the first part and the second part comprises plastic.

In a second aspect, there is provided a cable connector housing for hazardous areas, comprising:
- a first part;
- a second part;
- a first cable gland; and
- a second cable gland.
The second part is configured to connect to and separate from the first part. When the second part is connected to the first part a cavity is formed within which a cable connector can be housed. The first cable gland is configured to connect to the first part. The first cable gland is configured to connect to a part of a first cable that is suitable for use in a hazardous area. The second cable gland is configured to connect to the first part. The second cable gland is configured to connect to a part of a second cable that is suitable for use in the hazardous area. The first part, the second part, the first cable gland, and the second cable gland are configured such that when the first part is connected to the second part, and the first cable gland is connected to the first part and the first part is connected to the part of the first cable, and the second cable gland is connected to the second part and the second part is connected to the part of the second cable, a connector housing is formed that is suitable for use in the hazardous area.
In other words, the first part is a main body of a connector body to which cables can attach. The second part is then a lid of the first part.
Thus a hazardous environment proof outer connection body is provided that has a main body to which cable glands that are also certified for hazardous environments can be connected, and has a lid that when sealed to the main body provides for the hazardous environment outer body with the convenience of access to the insides. In this manner, a normal connector can be utilised for cable connection but which now resides within the hazardous environment suitable outer connection body. Thus, a cost-effective and convenient system is provided for connecting cables in hazardous environments.

In an example, the second part is configured to screw to the first part.

In an example, the second part is configured to bolt to the first part.

In an example, a structural material of the first part and the second part comprises metal.

In an example, a structural material of the first part and the second part comprises plastic.

In a third aspect, there is provided a cable connector housing for hazardous areas, comprising:
- a first part;
- a second part;
- a third part;
- a first cable gland; and
- a second cable gland.
The second part is configured to connect to and separate from the first part. The third part is configured to connect to and separate from the first part. The second part is configured to connect to and separate from the third part. When the second part is connected to the third part and the third part is connected to the first part and the second part is connected to the third part a cavity is formed within which a cable connector can be housed. The first cable gland is configured to connect to the first part. The first cable gland is configured to connect to a part of a first cable that is suitable for use in a hazardous area. The second cable gland is configured to connect to the first part. The second cable gland is configured to connect to a part of a second cable that is suitable for use in the hazardous area. The first part, the second part, the third part, the first cable gland, and the second cable gland are configured such that when the first part is connected to the second part and connected to the third part, and the second part is connected to the third part, and the first cable gland is connected to the first part and the first part is connected to the part of the first cable, and the second cable gland is connected to the second part and the second part is connected to the part of the second cable, a connector housing is formed that is suitable for use in the hazardous area.

Thus, an outer housing for a cable connector that need not be suitable for hazardous environments, is provided that itself is suitable for hazardous environments where in effect a central section is provided with 2 individual lids, enabling the connector within the outer body to be accessed in terms of either individual part being inspected in order to effect interrogation remedial action of the connector an efficient manner.
In other words, there is a central body (the first part) and it has two lids (the second part and the third part). Cables can attach to the first part, for example at either end of the first part, and you can access the inside of the connector hosing by opening the second part and/or the third part.
By having two lids, then a sail access area can be provided by opening each individually. However, because the hazardous connector housing is formed from these two lids that can connect to each other, when both lids are opened a large access area is provided.

In an example, the second part and the third part form a lid of the first part.

In an example, a structural material of the first part, second part and the third part comprises metal.

In an example, a structural material of the first part, the second part and the third part comprises plastic.

In a fourth aspect, there is provided a cable connector system for hazardous areas, comprising:
- a cable connector housing according the first aspect, or a cable connector housing according to the second aspect, or a cable connector according to the third aspect; and
- a cable connector.
The cable connector has a first part connected to the first cable that is connected to the first cable gland and has a second part connected to the second cable that is connected to the first cable gland, and wherein the first part and second parts of the cable connector are configured to connect to one another, and wherein the cable connector can be housed within the cavity formed within the cable connector housing. The cable connector is not suitable for hazardous areas.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Figure. 1 shows an example of a cable connector for a hazardous area;
Figure. 2 shows an example of a cable connector for a hazardous area,
Figure. 3 shows an example of a cable connector for a hazardous area.

### DETAILED DESCRIPTION OF EMBODIMENTS

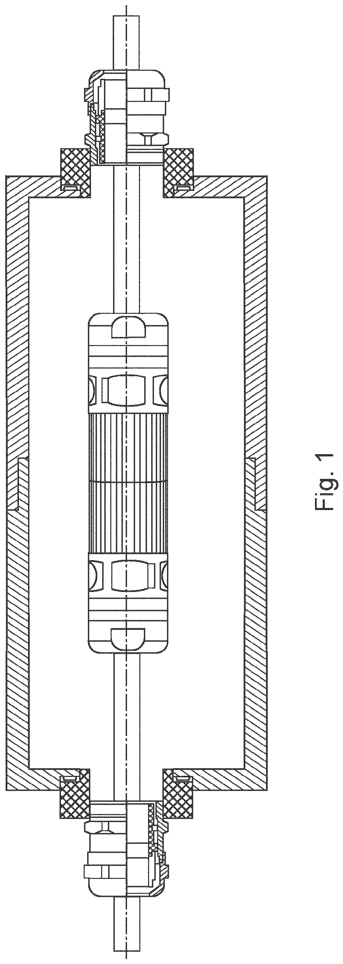

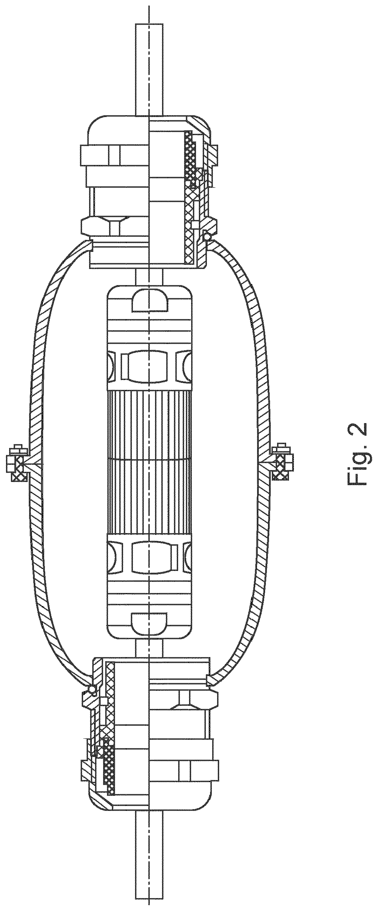

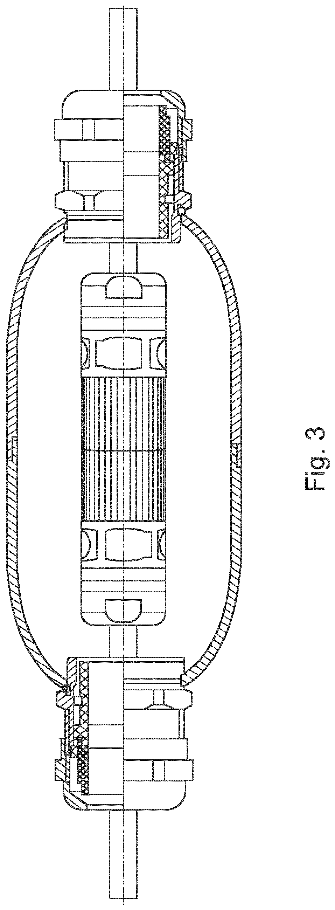

Figures 1-3 relate to cable connectors for hazardous areas. In an example, a cable connector housing for hazardous areas comprises a first part; a second part; a first cable gland; and a second cable gland: the first part is configured to connect to and separate from the second part: When the first part is connected to the second part a cavity is formed within which a cable connector can be housed. The first cable gland is configured to connect to the first part. The first cable gland is configured to connect to a part of a first cable that is suitable for use in a hazardous area. The second cable gland is configured to connect to the second part. The second cable gland is configured to connect to a part of a second cable that is suitable for use in the hazardous area. The first part, the second part, the first cable gland, and the second cable gland are configured such that when the first part is connected to the second part, and the first cable gland is connected to the first part and the first part is connected to the part of the first cable, and the second cable gland is connected to the second part and the second part is connected to the part of the second cable, a connector housing is formed that is suitable for use in the hazardous area.

In an example, the first cable gland is an EX-certified cable gland.

In an example, the second cable gland is an EX-certified cable gland.

In an example, the first cable is an EX-certified cable.

In an example, the second cable is an EX-certified cable.

According to an example, the first part is configured to screw to the second part.

According to an example the first part is configured to bolt to the second part.

According to an example a structural material of the first part and the second part comprises metal.

According to an example a structural material of the first part and the second part comprises plastic.

The figures also relate to a cable connector housing for hazardous areas comprising a first part, a second part, a first cable gland, and a second cable gland. The second part is configured to connect to and separate from the first part. When the second part is connected to the first part a cavity is formed within which a cable connector can be housed. The first cable gland is configured to connect to the first part. The first cable gland is configured to connect to a part of a first cable that is suitable for use in a hazardous area. The second cable gland is configured to connect to the first part. The second cable gland is configured to connect to a part of a second cable that is suitable for use in the hazardous area. The first part, the second part, the first cable gland, and the second cable gland are configured such that when the first part is connected to the second part, and the first cable gland is connected to the first part and the first part is connected to the part of the first cable, and the second cable gland is connected to the second part and the second part is connected to the part of the second cable, a connector housing is formed that is suitable for use in the hazardous area.

In an example, the first cable gland is an EX-certified cable gland.

In an example, the second cable gland is an EX-certified cable gland.

In an example, the first cable is an EX-certified cable.

In an example, the second cable is an EX-certified cable.

According to an example the second part is configured to screw to the first part.

According to an example the second part is configured to bolt to the first part.

According to an example a structural material of the first part and the second part comprises metal.

According to an example a structural material of the first part and the second part comprises plastic.

In an example, the connector has a third part similar to the second part that connects t the first part

The figures also relate to a cable connector housing for hazardous areas comprising a first part, a second part, a third part, a first cable gland, and a second cable gland. The second part is configured to connect to and separate from the first part. The third part is configured to connect to and separate from the first part. The second part is configured to connect to and separate from the third part. When the second part is connected to the first part and the third part is connected to the first part and the second part is connected to the third part a cavity is formed within which a cable connector can be housed. The first cable gland is configured to connect to the first part. The first cable gland is configured to connect to a part of a first cable that is suitable for use in a hazardous area. The second cable gland is configured to connect to the first part. The second cable gland is configured to connect to a part of a second cable that is suitable for use in the hazardous area. The first part, the second part, the third part, the first cable gland, and the second cable gland are configured such that when the first part is connected to the second part and connected to the third part, and the second part is connected to the third part, and the first cable gland is connected to the first part and the first part is connected to the part of the first cable, and the second cable gland is connected to the second part and the second part is connected to the part of the second cable, a connector housing is formed that is suitable for use in the hazardous area.

In an example, the first cable gland is an EX-certified cable gland.

In an example, the second cable gland is an EX-certified cable gland.

In an example, the first cable is an EX-certified cable.

In an example, the second cable is an EX-certified cable.

According to an example the second part and the third part form a lid of the first part.

According to an example a structural material of the first part, second part and the third part comprises metal.

According to an example a structural material of the first part, the second part and the third part comprises plastic.

From the above details it is clear that the cable connector housing can be utilised with cables and cable connector to form a cable connection system, where the cable connector itself does not need to be certified for hazardous areas. In an example, a cable connector system for hazardous areas comprises a cable connector housing as described in one of the examples above, that can have separate parts at each end or body part with a lid portion, or a body part with a lid portion formed from to separate parts all its. Thus in an example, the housing is utilise with a cable connector that is not suitable for hazardous environments. The cable connector has a first part connected to the first cable that is connected to the first cable gland and has a second part connected to the second cable that is connected to the first cable gland. The first part and second parts of the cable connector are configured to connect to one another, and the cable connector can be housed within the cavity formed within the cable connector housing.

Thus, non EX-approved connectors can be upgraded for use in hazardous areas by in effect protecting them with the safety cover which is itself a ex-certified. The cover consist of two parts that can be joined with the thread, in other words screwed together, and where for entry of the cables into the housing certified cable glands are utilised. Rather than screwing the two parts together, the two parts can be bolted together.

The connection of the cables can be provided by GP-connectors for example. The housing that is hazardous proof, in other words EX-certified, can come in a number of different forms, but just need to be separable in order that the connector inside can be accessed. The material of the cover can be metal or plastic, and the cover can be of two parts at either end or have 2 parts consisting of a main part with two lids or a main part with one lid.

The housing provided then enables non-hazardous connectors to be housed within it, and provide a hazardous environment solution utilising cost-effective connectors, with multiple cable connection possibilities. Indeed, the housing can enable more than one connector to utilise within it at the same time.

## Claims

1. A cable connector housing for hazardous areas, comprising:
- a first part;
- a second part;
- a first cable gland; and
- a second cable gland;
wherein, the first part is configured to connect to and separate from the second part;
wherein, when the first part is connected to the second part a cavity is formed within which a cable connector can be housed;
wherein, the first cable gland is configured to connect to the first part;
wherein, the first cable gland is configured to connect to a part of a first cable that is suitable for use in a hazardous area;
wherein, the second cable gland is configured to connect to the second part;
wherein, the second cable gland is configured to connect to a part of a second cable that is suitable for use in the hazardous area; and
wherein, the first part, the second part, the first cable gland, and the second cable gland are configured such that when the first part is connected to the second part, and the first cable gland is connected to the first part and the first part is connected to the part of the first cable, and the second cable gland is connected to the second part and the second part is connected to the part of the second cable, a connector housing is formed that is suitable for use in the hazardous area.

2. Cable connector housing according to claim 1, wherein the first part is configured to screw to the second part.

3. Cable connector housing according to claim 1, wherein the first part is configured to bolt to the second part.

4. Cable connector housing according to any of claims 1-3, wherein a structural material of the first part and the second part comprises metal.

5. Cable connector housing according to any of claims 1-3, wherein a structural material of the first part and the second part comprises plastic.

6. A cable connector housing for hazardous areas, comprising:
- a first part;
- a second part;
- a first cable gland; and
- a second cable gland;
wherein, the second part is configured to connect to and separate from the first part;
wherein, when the second part is connected to the first part a cavity is formed within which a cable connector can be housed;
wherein, the first cable gland is configured to connect to the first part;
wherein, the first cable gland is configured to connect to a part of a first cable that is suitable for use in a hazardous area;
wherein, the second cable gland is configured to connect to the first part;
wherein, the second cable gland is configured to connect to a part of a second cable that is suitable for use in the hazardous area; and
wherein, the first part, the second part, the first cable gland, and the second cable gland are configured such that when the first part is connected to the second part, and the first cable gland is connected to the first part and the first part is connected to the part of the first cable, and the second cable gland is connected to the second part and the second part is connected to the part of the second cable, a connector housing is formed that is suitable for use in the hazardous area.

7. Cable connector housing according to claim 6,
wherein the second part is configured to screw to the first part.

8. Cable connector housing according to claim 6,
wherein the second part is configured to bolt to the first part.

9. Cable connector housing according to any of claims 6-9, wherein a structural material of the first part and the second part comprises metal.

10. Cable connector housing according to any of claims 6-9, wherein a structural material of the first part and the second part comprises plastic.

11. A cable connector housing for hazardous areas, comprising:
- a first part;
- a second part;
- a third part;
- a first cable gland; and
- a second cable gland;
wherein, the second part is configured to connect to and separate from the first part;
wherein, the third part is configured to connect to and separate from the first part;
wherein, the second part is configured to connect to and separate from the third part;
wherein, when the second part is connected to the first part and the third part is connected to the first part and the second part is connected to the third part a cavity is formed within which a cable connector can be housed;
wherein, the first cable gland is configured to connect to the first part;
wherein, the first cable gland is configured to connect to a part of a first cable that is suitable for use in a hazardous area;
wherein, the second cable gland is configured to connect to the first part;
wherein, the second cable gland is configured to connect to a part of a second cable that is suitable for use in the hazardous area; and
wherein, the first part, the second part, the third part, the first cable gland, and the second cable gland are configured such that when the second part is connected to the first part and the third part is connected to the first part, and the second part is connected to the third part, and the first cable gland is connected to the first part and the first part is connected to the part of the first cable, and the second cable gland is connected to the second part and the second part is connected to the part of the second cable, a connector housing is formed that is suitable for use in the hazardous area.

12. Cable connector housing according to claim 11,
wherein the second part and the third part form a lid of the first part.

13. Cable connector housing according to any of claims 11-12, wherein a structural material of the first part, second part and the third part comprises metal.

14. Cable connector housing according to any of claims 11-12, wherein a structural material of the first part, the second part and the third part comprises plastic.

15. A cable connector system for hazardous areas, comprising:
- a cable connector housing according any of claims 1-5, or a cable connector housing according to any of claims 6-10, or a cable connector according to any of claims 11-14; and
- a cable connector;
wherein, the cable connector has a first part connected to the first cable that is connected to the first cable gland and has a second part connected to the second cable that is connected to the second cable gland, and wherein the first part and second parts of the cable connector are configured to connect to one another, and wherein the cable connector can be housed within the cavity formed within the cable connector housing; and
wherein the cable connector is not suitable for hazardous areas.
